# EUROPÄISCHE PATENTSCHRIFT

(11) **EP 3 887 468 B1**
(45) Veröffentlichungstag und Bekanntmachung des Hinweises auf die Patenterteilung: **06.05.2026**
(21) Anmeldenummer: 18815576.6
(22) Anmeldetag: 29.11.2018
(51) Int. Cl.: C09J 9/02, C09J 175/00, C09J 7/10, C09J 175/04

(54) **VERFAHREN ZUR HERSTELLUNG EINES LATENT REAKTIVEN KLEBEFILMS AUF POLYURETHANBASIS**
PROCESS FOR PRODUCING A LATENTLY REACTIVE POLYURETHANE-BASED ADHESIVE FILM
PROCÉDÉ DE FABRICATION D'UN FILM ADHÉSIF À RÉACTIVITÉ LATENTE À BASE DE POLYURÉTHANE

(43) Veröffentlichungstag der Anmeldung: 06.10.2021
(73) Patentinhaber: Lohmann GmbH & Co. KG, 56567 Neuwied (DE)
(72) Erfinder: KELSCH, Annette, 56581 Melsbach (DE); AST, Jana, 56626 Andernach (DE); SCHINDLER, Kerstin, 53578 Rederscheid (DE)
(74) Vertreter: Schulz, Oliver Frank Michael
(86) Internationale Anmeldenummer: PCT/EP2018/083069
(87) Internationale Veröffentlichungsnummer: WO 2020/108765

(56) Entgegenhaltungen:
- EP-A1- 2 884 590
- EP-A2- 1 134 245
- WO-A1-03/016374
- DE-A1- 102012 203 249
- DE-A1- 102013 217 880
- US-A1- 2016 046 775
- "Polymer Crystallization : Methods, Characterization and Applications", 30 October 2023, WILEY, article NURAZZI N M ET AL: "Introduction to Polymer Crystallization : Methods, Characterization and Applications", pages: 1 - 12, XP093171929, DOI: 10.1002/9783527839247.ch1

## Beschreibung

### Technisches Gebiet

Die vorliegende Erfindung betrifft ein Verfahren zur Herstellung eines latent reaktiven Klebefilms auf Polyurethanbasis.

### Stand der Technik

Die Anforderungen an Klebeverbindungen werden immer höher, so dass die Kräfte, die Haftklebebänder aufnehmen können, immer häufiger nicht mehr ausreichen. Auch das Anwendungsspektrum für Klebeverbindungen nimmt stetig zu.

Abhilfe schaffen unter anderem hitzeaktivierbare, reaktive Klebefilme auf Polyurethanbasis. Polyurethanklebstoffe zeichnen sich aufgrund der hohen Polarität der Polymermoleküle und der teilweise kristallinen Struktur innerhalb der Polymerketten durch sehr gute Haftungseigenschaften auch auf schwierig zu verklebenden Oberflächen aus. Darüber hinaus besitzen Polyurethanklebstoffe eine hohe Beständigkeit gegenüber Weichmachern, Ölen, Fetten, Feuchtigkeit, Wärme und zum Teil auch Lösungsmitteln.

Mittels Polyurethanklebstoffen können einkomponentige Systeme bereitgestellt werden, die direkt zum Einsatz kommen können, d. h. ein Mischen der Komponenten unmittelbar vor der Anwendung ebenso wie eine Topfzeit bis zur endgültigen Aushärtung ist nicht erforderlich.

Nichtsdestotrotz entspricht die Klebkraft der einkomponentigen, latent reaktiven Systeme durchaus derjenigen von Zweikomponenten-Systemen. Demnach können mit den einkomponentigen, latent reaktiven Klebesystemen quasistatische Scherfestigkeiten auf Polycarbonat (PC) von >12 MPa erzielt werden.

Latent reaktiv bedeutet in diesem Zusammenhang, dass eine wässrige, z.B. nur 100 µm dünne Polyurethan-Dispersionsschicht bereits einige Zeit vor dem eigentlichen Verkleben auf ein zu verklebendes Teil aufgebracht und getrocknet werden kann. Bei Raumtemperatur bleibt diese Schicht lagerstabil und blockfrei und erst beim späteren Erhitzen erfolgt die Aktivierung des Klebstoffs und damit die Verklebung der beiden zu verklebenden Teile. Dadurch können für den Anwender die Klebstoffapplikation und die finale Herstellung der Klebeverbindung nicht nur zeitlich, sondern auch räumlich getrennt werden.

Bei quasistatischen Prüfverfahren wird die Belastung langsam, stoßfrei und stetig ansteigend bis zum Bruch des verwendeten Prüfkörpers aufgebracht, in diesem Falle wird so die Scherfestigkeit ermittelt und in MPa (Megapascal) gemessen Die Scherfestigkeit ist der Widerstand, den ein Festkörper tangentialen Scherkräften entgegensetzt.

Latent reaktive, hitzeaktivierbare Klebesysteme sind beispielsweise aus der DE 10 2010 013 145 A1 und der DE 10 2011 008 430 A1 bekannt.

Die in DE 10 2010 013 145 A1 gezeigte Klebmasse erfüllt eine Kombination von unterschiedlichen Anforderungsprofilen, die so bis dato nicht in einem einzigen Klebstoffsystem vereint waren, nämlich zum einen das eines latent reaktiven, bereits bei Raumtemperatur leicht haftklebrigen Klebstoffes, der unter Einwirkung von Hitze aushärtet und eine strukturelle Verklebung der beiden Fügepartner ermöglicht. "Strukturelle Verklebung" bedeutet, dass die beiden Fügepartner durch den Klebstoff zu einer einzigen Struktur gefügt werden, die dadurch auszeichnet, dass im Fall einer versuchten späteren Trennung der beiden Fügepartner nicht die Klebenaht die Schwachstelle im Verbund bildet, sondern vielmehr einer der beiden Fügepartner.

DE 10 2011 008 430 A1 zeigt einen "trockenen", hitzeaktivierbaren, latent reaktiven, einkomponentigen Polyurethanfilm, der bei Raumtemperatur keinerlei Klebkraft aufweist und auch nach seiner Aktivierung infolge Wärmezugabe und anschließender Abkühlung nicht mehr klebrig ist, sondern Bestandteil einer strukturellen Verbindung zweier Fügepartner, wie vorstehend beschrieben. Ein wesentlicher Vorteil des in beiden genannten Anmeldungen beschriebenen Systems liegt in der Möglichkeit, Substratoberflächen lagerstabil mit einer reaktiven Klebstoffschicht auszurüsten, d. h. der Klebstoffauftrag lässt sich aus dem eigentlichen Herstellungsprozess des gewünschten Endprodukts auslagern. Prozessabläufe werden so vereinfacht und damit auch kostengünstiger.

Darüber hinaus ist seit einiger Zeit der Trend zu verzeichnen Klebstoffe mit zusätzlichen Eigenschaften zu versehen. So sind Klebstoffe bekannt, die neben einer Klebkraft auch leitfähige Eigenschaften aufweisen.

Leitfähige Klebstoffe sind aus dem Stand der Technik bekannt, auch leitfähige Urethanenthaltende bzw. auf Urethan basierende Klebmassen. So beschreibt beispielsweise WO 2014/122866 A1 eine wärmeleitfähige Licht-härtbare Klebmasse umfassend Polyurethan und ein fotopolymerisierbares Monomer mit einer (Meth)acryloyl-Gruppe sowie einen anorganischen Füllstoff und einen Fotoinitiator.

WO 2009/090997 A1 zeigt eine härtbare elektromagnetisch abschirmende klebende Konstruktion bestehend aus einer elektrisch-leitfähige Füllstoffen enthaltenden Schicht auf Basis Polyurethan- Polyharnstoff und Epoxidharz sowie einer härtbaren isolierenden Schicht auf Basis einer zweiten Polyurethan-Polyharnstoff-Verbindung und Epoxidharz ohne Füllstoffe.

Gegenstand der WO 2016/002780 A1 ist eine leitfähige Klebmasse umfassend einen Polyurethan- Polyharnstoff, ein Epoxidharz und einen Füllstoff, wobei das Polyurethan-Polyharnstoff ein Reaktionsprodukt aus einer Polyamino-Verbindung und einem Urethan-Präpolymeren ist. Letzteres wiederum ist ein Reaktionsprodukt aus einem Polyol-Bestandteil, einem Diisocyanat und einer Diol- Verbindung. Der fertige Film wird durch Wärmeeintrag verflüssigt und fließt dann zwischen die zu verbindenden Teile.

Der Klebefilm gemäß WO 2006/088127 A1 hat elektromagnetisch abschirmende Wirkung infolge der in seiner härtbaren klebenden Schicht auf Basis Polyurethan-Polyharnstoff und Epoxidharz enthaltenen elektrisch leitfähigen Füllstoffe.

WO 2018/003704 A1 zeigt einen unter Hitzeeinwirkung vernetzenden elektrischleitfähigen Klebstoff umfassend ein spezifisches urethan-modifiziertes polyfunktionales (Meth)acrylatoligomer, ein monfunktionales (Meth)acrylatoligomer, organisches Peroxid sowie elektrisch leitfähige Partikel.

EP 2 884 590 A1 zeigt einen anisotrop leitfähigen Film mit einem kristallinen Harz, einem amorphen Harz und elektrisch leitfähigen Partikeln.

EP 1 134 245 A2 zeigt eine Zubereitung von Isocyanaten mit wässrigen isocyanatreaktiven Polymerdispersionen, Verfahren zu ihrer Herstellung und ihre Verwendung für Klebeverbindungen.

US 2016/0046775 A1 zeigt einen Klebefilm mit einem hitze-aktivierbaren Klebstoff, welcher oberflächendesaktiviertes Isocyanat und ein Polymer, dessen funktionale Gruppen mit Isocyanat reagieren, aufweist.

WO 03/016374 zeigt eine wässrige Dispersion feinteilig dispergierter oberflächendesaktivierter Feststoffisocyanate sowie Zubereitungen enthaltend diese Dispersionen und deren Verwendung zur Herstellung latentreaktiver Schichten, Filme oder Pulver.

DE 10 2013 217 880 A1 zeigt ein latentreaktives Klebeprodukt mit mindestens einer Schicht eines latentreaktiven Klebefilms A, der eine thermoplastische Komponente und funktionelle Gruppen enthält, die mit Isocyanat reagieren können, und eine Isocyanat-haltige Komponente, die partikulär in die thermoplastische Komponente eindispergiert vorliegt.

DE 10 2012 203 249 A1 zeigt ein Produkt mit einer Schicht eines latentreaktiven Klebefilms, der eine thermoplastische Komponente aufweist und funktionelle Gruppen enthält, die mit Isocyanat reagieren können, und eine Isocyanat-haltige Komponente, die partikulär in die thermoplastische Komponente eindispergiert vorliegt.

In "Polymer Crystallization: Methods, Characterization and Applications", veröffentlicht am 30.10.2023 vom Wiley-Verlag, wird das Verhalten kristalliner Polymere beschrieben.

Keiner der zuvor beschriebenen leitfähigen Klebstoffe ist jedoch dazu in der Lage, hohe quasistatische Scherfestigkeiten in der Größenordnung von zum Beispiel >6 MPa bereitzustellen und damit eine strukturelle Verbindung zu ermöglichen. Entsprechend eignen sich die vorstehenden leitfähigen Klebesysteme nur für ein vergleichsweise eingeschränktes Anwendungsspektrum. Für Anwendungsspektren, die eine vergleichsweise hohe, d.h. strukturelle Verklebungsfestigkeit, wie zum Beispiel eine hohe quasistatische Scherfestigkeit, erfordern, kommen diese Klebstoffe nicht infrage.

Demnach besteht ein Bedarf für Klebstoffe, die neben hohen quasistatischen Scherfestigkeiten auch leitfähige Eigenschaften aufweisen. Entsprechende, wünschenswerte Anwendungsgebiete sind zum Beispiel flächige Verklebungen mit inhärenter Ableitbarkeit für Teppichverklebungen oder zur Kontaktierung von Heiztextilien wie zum Beispiel einer Sitzheizung oder beheizbarer Wandelemente. Auch im Modebereich besteht ein zunehmendes Interesse leitfähige Elemente zu integrieren. Allen diesen Gebieten liegen vergleichsweise hohe Anforderungen an die Verklebungsfestigkeit zu Grunde. Mit den bisher bekannten Mitteln kann dem Erfordernis einer hohen Verklebungsfestigkeit bei gleichzeitiger Leitfähigkeit nur auf separatem Wege begegnet werden.

### Darstellung der Erfindung

Ausgehend von dem bekannten Stand der Technik ist es eine Aufgabe der vorliegenden Erfindung, einen latent reaktiven Klebefilm auf Polyurethanbasis mit einem erweiterten Anwendungsspektrum, eine Verwendung des Klebefilms sowie ein entsprechendes Verfahren zu dessen Herstellung bereitzustellen.

Die Aufgabe wird durch ein Verfahren mit den Merkmalen des Anspruchs 1 gelöst. Vorteilhafte Weiterbildungen ergeben sich aus den Unteransprüchen.

Entsprechend wird ein Verfahren zur Herstellung eines latent reaktiven Klebefilms auf Polyurethanbasis vorgeschlagen, in welchem bis zu 98 Gew.-% einer kristallinen und/oder einer kristallinen und amorphen Polyurethan-Dispersion, 2 bis 65 Gew.-% eines elektrisch leitfähigen Füllstoffs und ein Vernetzer vermischt werden.

Die kristalline Polyurethan-Komponente bildet einen trockenen Film, der eine semikristalline Struktur aufweist, die dazu führt, dass der Film bei Raumtemperatur keinen Tack aufweist und sich somit leicht repositionieren lässt.

Im Unterschied dazu weist eine kristalline und amorphe Polyurethan-Komponente bei Raumtemperatur einen leichten Tack, d.h. eine leichte Haftklebrigkeit auf.

Die Filme auf Polyurethanbasis besitzen eine Schmelztemperatur von 50°C plus/minus 10°C. Werden die Filme auf eine Temperatur im Bereich der Schmelztemperatur aufgeschmolzen, so entfalten sie klebrige Eigenschaften, wodurch eine Vorlaminierung, d.h. eine erste Ausrichtung der Fügepartner zueinander ermöglicht werden kann.

Die eigentliche Aktivierung der Filme erfolgt bei Temperaturen im Bereich von 70-120°C. Nach Abschluss der durch die Hitzeaktivierung angestoßenen Reaktion liegt eine endfeste strukturelle Verbindung vor, die dauerhaft vergleichsweise hohen Belastungskräften standhalten kann.

Durch die Zugabe von leitfähigen Füllstoffen kann nun das Anwendungsspektrum der latent reaktiven Klebefilme erheblich vergrößert werden. So weist eine kristalline Polyurethan- Komponente mit eindispergierten leitfähigen Füllstoffpartikeln nach der Abkühlung auf Raumtemperatur bereits eine hohe Festigkeit auf. Diese ist allein auf die Rekristallisation der Polyurethan-Komponente zurückzuführen.

Die Füllstoffe sind elektrisch leitfähig. Die Integration dieser Füllstoffe in eine kristalline und/oder einer kristallin-amorphen Polyurethan-Komponente ermöglicht ein Klebstoffsystem mit einer vergleichsweise hohen quasistatischen Scherfestigkeit auf Polycarbonat von >6 MPa und mehr. Dadurch lassen sich flächige, leitfähige, strukturelle Verklebungen realisieren.

Beispielhaft zu nennen sind Teppichverklebungen, die in der Regel einer hohen Belastung ausgesetzt sind. Hier sind Klebstoffe mit hohen Verklebungsfestlichkeiten gefordert. Mit dem vorstehend beschriebenen Klebstoffsystem kann eine Teppichverklebung realisiert werden, die zum einen hochfest und zum anderen ableitfähig ist.

Klebeverbindungen sind in der Textilindustrie weit verbreitet. Der Trend geht dahin, elektronische Komponenten in Textilien, wie zum Beispiel in Kleidungsstücke, zu integrieren. Beispielsweise können Leiterbahnen in Form von Streifenstrich oder Stanzteilen für eine Lichtintegration im Modebereich vorgesehen sein. Da die Kleidungsstücke beim Tragen in der Regel hohen Belastungen ausgesetzt sind, müssen die leitfähigen Klebstoffsysteme eine entsprechend hohe Verklebungsfestigkeit aufweisen. Das vorstehend beschriebene Klebstoff System kann diesen Anforderungen gerecht werden.

Der leitfähige Stoff kann in unterschiedlichen Partikelformen bereitgestellt werden. So können sphärische, dendritische, stäbchenförmige, spratzige (unförmige) oder auch plättchenförmige Partikel zum Einsatz kommen.

Ist eine Leitfähigkeit in z-Richtung des Klebefilms gewünscht, was in der Regel bei dicken Klebstoffschichten der Fall ist, so empfiehlt sich die Verwendung möglichst großvolumiger Partikel, weil dadurch weniger Übergänge zu überbrücken sind. Der Nachteil dabei wiederum ist, dass sich die Partikel nach der Herstellung der leitfähigen Klebmasse im Gefäß schneller absetzen und dadurch keine stabile leitfähige Dispersion erzeugt wird, was die Prozessierbarkeit deutlich erschwert. Um dies zu verhindern, werden dem diese Partikel enthaltenden Klebstoff Dispergieradditive zugesetzt, was aber wiederum auch zu einer schlechteren Leitfähigkeit führt. Handelt es sich hingegen um dünne Klebstoffschichten, so ist eher eine Leitfähigkeit in x-y Richtung des Klebstofffilms gewünscht. Hier bietet sich die Verwendung von flachen, plättchenförmigen Partikeln an, die sich parallel zur Klebstoffoberfläche ausrichten. Zu beachten ist allerdings, dass je größer die Oberfläche der Partikel ist, desto weniger Partikel können in das Klebstoffsystem eingearbeitet werden.

Die Polyurethan-Komponente ist mit Isocyanat reagierbar. Die kristalline Polyurethan-Komponente kann beispielsweise auf einer anionischen hochmolekularen Polyurethan-Dispersion basieren. Diese bildet einen trockenen Film, der eine semikristalline Struktur aufweist, die dazu führt, dass der Film bei Raumtemperatur keinen Tack aufweist und sich somit leicht repositionieren lässt.

In einer weiter bevorzugten Ausgestaltung umfasst die kristalline Polyurethan-Komponente semikristallines Polyesterpolyurethan. Dieses ermöglicht ein Aufschmelzen der kristallinen Domänen, so dass sich klebrige Eigenschaften entfalten, wodurch eine Vorlaminierung möglich wird.

Der Klebefilm umfasst einen Vernetzer, der eine Isocyanat-haltige Komponente ist, die in die Polyurethan-Komponente partikulär eindispergiert ist.

Die kristalline Polyurethan-Komponente mit eindispergierten Isocyanatpartikeln bildet einen trockenen Film, der eine semikristalline Struktur aufweist, die dazu führt, dass der Film bei Raumtemperatur keinen Tack aufweist und sich somit leicht repositionieren lässt.

Die eigentliche Aktivierung des Klebefilms erfolgt bei Temperaturen im Bereich von 50-120°C. Durch die Zugabe eines Vernetzers, wie zum Beispiel Isocyanat, kommt es infolge einer Aktivierung durch Wärmebehandlung zusätzlich zu einer Vernetzungsreaktion. Dabei reagieren die Isocyanatgruppen mit den funktionellen Gruppen des thermoplastischen Polyurethans und vernetzen das System, wodurch die Festigkeit des Films erhöht wird. Dadurch weist der Klebefilm auch bei höheren Temperaturen die vergleichsweise hohen Festigkeiten von bis zu 10 MPa auf. Nach Abschluss der durch die Hitzeaktivierung angestoßenen Reaktion liegt eine endfeste Verbindung vor, die dauerhaft vergleichsweise hohen Belastungskräften standhalten kann.

Im Fall von blockierten Isocyanatgruppen hängt die Aktivierungstemperatur von der Deblockierungstemperatur ab. Im Fall von im Bereich der Oberfläche der Isocyanatpartikel desaktivierten Isocyanatgruppe beginnt die Aktivierung mit dem Aufschmelzen der Isocyanatpartikel.

Durch Kombination von Polyurethan-Komponenten mit Isocyanat-haltigen Komponenten entstehen nach der Hitzeaktivierung besonders endfeste Verbindungen, welche dauerhaft hohen Belastungen standhalten. In einer weiter bevorzugten Ausführungsform umfasst der latent reaktive Klebefilm bis zu 40 Gew.- % eines Vernetzers, bis zu 5 Gew.-% eines Verdickers, und/oder bis zu 5 Gew.-% eines Dispergieradditivs.

Wie vorstehend beschrieben, bewirkt der Vernetzer eine Aushärtung des Klebstoffs nach einer Aktivierung durch entsprechende Temperaturen. Der Verdicker verleiht der Klebstoffdispersion bei deren Herstellung eine zum Beschichten nötige Viskosität. Das Dispergieradditiv trägt bei der Klebstoffherstellung dazu bei, dass die verschiedenen Bestandteile homogen verteilt sind.

In einer bevorzugten Weiterbildung umfasst die amorphe Polyurethan-Komponente Polyurethane und/oder Polyacrylate. Im letztgenannten Fall geschieht dies, weil die adhäsiven Eigenschaften von Acrylaten deren Verklebung auf Substraten, auf welchen Polyurethane weniger gut haften, begünstigt.

In einer bevorzugten Weiterbildung weist der latent reaktive leitende Klebefilm eine quasistatische Scherfestigkeit von mindestens 6 MPa auf PC auf. Dadurch sind leitfähigen Klebefilme mit noch nicht dagewesenen Festigkeitseigenschaften möglich. Je nach Wahl der Füllstoffe kann die Scherfestigkeit auch Werte von über 8 MPa auf PC betragen.

Zu den elektrisch leitfähigen Füllstoffen zählen Metalle wie zum Beispiel Silber; versilberte Metalle und Metalloxide wie zum Beispiel versilbertes Kupfer, versilbertes Aluminium, versilbertes Glas oder versilbertes Zinkoxid; karbonhaltige Materialien wie zum Beispiel Graphit, Graphen, Carbon Nanotubes (CNT) und leitfähige Polymere wie zum Beispiel Poly-3-Hexylthiophen (P3HT).

Zu thermisch leitfähigen Füllstoffen zählen Metalloxide wie zum Beispiel Aluminiumoxid, Metallhydroxide wie zum Beispiel Aluminiumhydroxiden und Metallnitride wie zum Beispiel Bornitrit.

Zu magnetisch leitfähigen Füllstoffen zählen weichmagnetische Werkstoffe wie zum Beispiel Legierungen auf Basis von Kobalt, Nickel, oder Eisen; und hartmagnetische Werkstoffe wie zum Beispiel Neodym-Eisen-Bor (NdFeB) oder Kobalt-Samarium.

Die Partikelgröße von Füllstoffen auf Metallbasis liegt zwischen 2 nm bis 30 µm. Die Partikelgröße von Füllstoffen in Form von versilberten Materialien liegt zwischen 2 µm bis 100 µm, bevorzugt zwischen 18 µm bis 75 µm. Die Partikelgröße von Füllstoffen in Form von karbonhaltigen Materialien liegt in der Regel zwischen 3 nm bis 70 µm.

Der in dem vorliegenden Klebefilm enthaltene Füllstoff kann auch auf Partikelmischungen aus den vorstehend beschriebenen Füllstoffen basieren. Bevorzugt finden Mischungen aus versilberten Materialien und karbonhaltigen Materialien Anwendung. Durch die vorstehende Kombination von Füllstoffen können Klebefilme mit hohen quasistatischen Scherfestigkeitswerten bei gleichzeitig hoher elektrischer Leitfähigkeit bereitgestellt werden.

Der Klebefilm besitzt bei Raumtemperatur geringfügigen bis keinen Tack und kann entsprechend einfach am Einsatzort bzw. auf den entsprechenden Fügepartnern positioniert bzw. repositioniert werden.

In einer bevorzugten Ausführungsform weist der latent reaktive Klebefilm auf Polyurethanbasis eine Schichtdicke von 7 µm bis 1000 µm auf.

Die oben gestellte Aufgabe wird weiterhin durch eine Verwendung eines latent reaktiven Klebefilms auf Polyurethanbasis mit den Merkmalen des Anspruchs 6 gelöst. Entsprechend wird der Klebefilm auf den Einsatzort bzw. die Fügepartner aufgebracht, wo der Klebefilm mittels einer Aktivierungstemperatur von 70-120°C schließlich seine endfeste Verbindung entfaltet.

Die eigentliche Aktivierung eines solchen Klebefilms erfolgt bei Temperaturen im Bereich von 50-120°C. Dabei reagieren Isocyanatgruppen mit den funktionellen Gruppen des thermoplastischen Polyurethans und tragen somit zur Vernetzung des Systems, wodurch die Festigkeit des Films erhöht wird. Nach Abschluss der durch die Hitzeaktivierung angestoßenen Reaktion liegt eine endfeste Verbindung vor, die dauerhaft vergleichsweise hohen Belastungskräften standhalten kann.

Die Vorteile eines mittels dieses Verfahrens hergestellten latent reaktiven Klebefilms auf Polyurethanbasis mit eindispergierten, leitfähigen Füllstoffen können der vorstehenden Beschreibung entnommen werden.

### Detaillierte Beschreibung bevorzugter Ausführungsbeispiele

Im Folgenden werden Versuchsbeispiele beschrieben.

In einer bevorzugten Ausführungsform kann ein leitfähiger latent reaktiver Klebefilm auf Polyurethanbasis mit den folgenden Ausgangsmitteln bereitgestellt werden. Eine Polyurethan- Dispersion kann einen aromatischen Vernetzer wie zum Beispiel Toluylen-Diisocyanat-Verbindungen (TDI-Verbindungen) und/oder einen aliphatischen Vernetzer wie zum Beispiel Isophorondiisocyanat (IPDI) aufweisen. Als elektrisch leitfähige Füllstoffe können beispielsweise die folgenden Partikel zum Einsatz kommen: eConduct Aluminium 202000^{®}, eConduct Aluminium 451500^{®}, VP70308^{®}, eConduct Glass 352000^{®}, eConduct Glass 205002^{®} und eConduct Copper 341000^{®} alle der Firma ECKART GmbH. Die durchschnittliche gängige Partikelgröße in den durchgeführten Versuchen weist einen Durchmesser von 50 µm auf.

Eine allgemeine Formulierung eines leitfähigen latent reaktiven Klebefilms auf Polyurethanbasis kann wie folgt gebildet sein:

**Tabelle 1**

| Komponenten | Anteil |
|---|---|
| Kristalline PU Komponente | Bis 98 Gew.-% |
| Kristalline + amorphe PU Komponente | Bis 98 Gew.-% |
| Leitfähige Füllstoffe | 2 bis 80 Gew.-% |
| Vernetzer | 0 bis 40 Gew.-% |
| Verdicker | 0 bis 5 Gew.-% |
| Dispergieradditiv | 0 bis 5 Gew.-% |
| Zusätzliche Additive | 0 bis 5 Gew.-% |

Aus Tabelle 1 wird ersichtlich, dass die kristalline Polyurethankomponente und die leitfähigen Füllstoffe die wesentlichen Bestandteile des leitfähigen latent reaktiven Klebefilms bilden. So weist eine kristalline Polyurethan-Komponente mit eindispergierten leitfähigen Füllstoffpartikeln nach der Abkühlung auf Raumtemperatur bereits eine hohe Festigkeit auf. Diese ist allein auf die Rekristallisation der Polyurethan-Komponente zurückzuführen.

Durch die Zugabe eines Vernetzers, wie zum Beispiel Isocyanat, kommt es infolge einer Aktivierung durch Wärmebehandlung zusätzlich zu einer Vernetzungsreaktion. Dabei reagieren die Isocyanat- Gruppen mit den funktionellen Gruppen des thermoplastischen Polyurethans und vernetzen das System. Dadurch weist der Klebefilm auch bei höheren Umgebungstemperaturen die vergleichsweise hohen Festigkeiten von über 6 MPa auf PC auf.

Schließlich können die nachfolgenden Additive zusätzlich enthalten sein: Entschäumer, Stabilisatoren, Pigmente zur Färbung, Katalysatoren, Alterungsschutzmittel, Lichtschutzmittel und weitere Polymere zur Einstellung weiterer Klebeeigenschaften.

Zu Versuchszwecken wurden zwei leitfähige latent reaktive Klebefilme auf Polyurethanbasis hergestellt. Die beiden Versuchsklebefilme werden nachfolgend als System 1 und System 2 bezeichnet. Die nachfolgenden Rezepturen entsprechen der flüssigen Polyurethandispersion.

### System 1:

**Tabelle 2**

| Komponenten | Anteil |
|---|---|
| Kristalline PU Komponente | 54,1 Gew.-% |
| Vernetzer (Isocyanat) | 11,1 Gew.-% |
| Leitfähiger Füllstoff (eConduct Aluminium 451500^{®} | 32,6 Gew.-% |
| Verdicker | 1,4 Gew.-% |

Bei einer Messung der Leitfähigkeit in z-Richtung, das heißt senkrecht zur flächigen Klebstoffschicht, weist System 1 eine vergleichsweise hohe Leitfähigkeit von 0,2-0,4 mOhm auf.

### System 2

**Tabelle 3**

| Komponenten | Anteil |
|---|---|
| Kristalline PU Komponente | 66,4 Gew.-% |
| Vernetzer (Isocyanat) | 13,6 Gew.-% |
| Leitfähiger Füllstoff (eConduct Copper 341000^{®} | 17,3 Gew.-% |
| Verdicker | 1,4 Gew.-% |

Bei einer Messung der Leitfähigkeit in z-Richtung, das heißt senkrecht zur flächigen Klebstoffschicht, weist System 2 eine vergleichsweise geringere Leitfähigkeit auf Kupfersubstraten mit einem Widerstand von 2-30 Ohm auf. Dies ist darauf zurückzuführen, dass der verwendete leitfähige Füllstoff plättchenförmig ist (eConduct Copper 341000^{®}).

### Herstellung:

Nachfolgend wird die Herstellung eines leitfähigen latent reaktiven Klebefilms beschrieben.

Flüssiges kristallines Polyurethan wird optional mit einem Vernetzer und den entsprechenden leitfähigen Partikeln in einem Speedmixer homogenisiert. Die erhaltene Dispersion wird mittels eines Rakels auf ein Substrat aufgetragen. Der so entstandene Film wird für 5 Minuten bei 50°C getrocknet. Schließlich liegt ein leitfähiger latent reaktiver Klebefilm mit einer Schichtdicke von 100 µm vor.

Der Beschichtungsvorgang kann auf der zweiten Seite des Substrats wiederholt werden, wodurch ein zweiseitiges latent reaktives Klebeband erhalten wird.

### Versuchsdurchführung:

Zur Ermittlung der quasistatischen Scherfestigkeit und der elektrischen Leitfähigkeit in Abhängigkeit der Klebefilmsysteme wurden die nachfolgend beschriebenen Versuche durchgeführt.

Zunächst werden zwei Kupferbleche zugeschnitten, angeschliffen und gereinigt. Die Kupferbleche werden in eine einander überlappende Position gebracht, wobei die überlappende Fläche 312,5 mm² beträgt, und wobei das zuvor beschrieben Klebeband zwischen die beiden Kupferbleche gebracht wird. Schließlich werden die beiden Kupferbleche und das Klebeband miteinander verpresst. Dies geschieht unter 2,5 bar bei 120°C für 5 Minuten. Anschließend folgt ein Kaltpressen bei 3,5 bar für 3 Minuten.

In einem nächsten Schritt werden die beiden freiliegenden Enden der Kupferplättchen mit einem Ohmmeter verbunden. Als Ohmmeter wird ein Loresta-RX Niederohmmessgerät der Firma NH- Instruments verwendet.

Neben der Messung des elektrischen Widerstandes erfolgt eine quasistatische Scherfestigkeitsprüfung, der eine Fläche von 312,5 mm² auf PC zugrunde liegt.

Die Versuche haben zu folgenden Ergebnissen geführt:

**Tabelle 4**

| Füllstoff | Füllstoffgehalt im trockenen Klebefilm | Quasistatische Scherfestigkeit auf PC | Elektrische Leitfähigkeit |
|---|---|---|---|
| Versilbertes Aluminium (sphärisch) System 1 | 52 Gew.-% | 9,1 MPa (2827 N/312,5 mm²) | 0,19-0,4 mOhm |
| Versilbertes Glass (Plättchen) | 42 Gew.-% | 6,4 MPa (2000 N/312,5 mm²) | 2,6-5,7 mOhm |
| Versilbertes Kupfer (Plättchen) System 2 | 32 Gew.-% | 8,3 MPa (2588 N/312,5 mm²) | 2.057-31.400 mOhm |

Die Versuche haben gezeigt, dass die quasistatische Scherfestigkeit der Klebefilme unabhängig von der Wahl des leitfähigen Füllstoffs über 6 MPa auf PC liegt.

Systeme mit Füllstoffen auf Basis von versilberten Metallen wie zum Beispiel versilbertes Aluminium und versilbertes Kupfer erreichen auch bei vergleichsweise hohen Füllgraden (d.h. sogar bei mehr als 50 % in Abhängigkeit vom verwendeten Füllstoff) Scherfestigkeitswerte zwischen 8 bis 11 MPa auf PC.

## Patentansprüche

1. Verfahren zur Herstellung eines latent reaktiven Klebefilms auf Polyurethanbasis, welcher eine Schmelztemperatur von 50 ± 10°C aufweist, wobei
- bis zu 98 Gew.-% einer kristallinen und/oder einer kristallinen und amorphen Polyurethan-Dispersion mit 2 bis 65 Gew.-%, eines elektrisch leitfähigen Füllstoffs und einem Vernetzer vermischt werden, wobei der Vernetzer eine Isocyanat-haltige Komponente ist, die in die Polyurethan-Dispersion partikulär eindispergiert ist und eine Aktivierungstemperatur von 70-120°C aufweist,
- die Polyurethan-Dispersion samt eindispergiertem, elektrisch leitfähigem Füllstoff und Vernetzer auf einen Träger, insbesondere einen leitfähigen Träger oder einen Releaseliner aufgetragen werden, so dass ein Verbund entsteht,
- der Verbund getrocknet wird.

2. Verfahren gemäß Anspruch 1, **dadurch gekennzeichnet, dass** der Vernetzer blockierte Isocyanatgruppen oder im Bereich einer Oberfläche der Isocyanatpartikel desaktivierte Isocyanatgruppen aufweist.

3. Verfahren gemäß Anspruch 1 oder 2, **dadurch gekennzeichnet, dass** der Klebefilm
bis zu 40 Gew.-% eines Vernetzers,
bis zu 5 Gew.-% eines Verdickers, und/oder
bis zu 5 Gew.-% eines Dispergieradditivs umfasst.

4. Verfahren gemäß einem der vorhergehenden Ansprüche, **dadurch gekennzeichnet, dass** der elektrisch leitfähige Füllstoff Metalle, versilberte Metalle, Metalloxide, karbonhaltige Materialien und/oder leitfähige Polymere umfasst.

5. Latent reaktiver Klebefilm auf Polyurethanbasis, hergestellt mit dem Verfahren gemäß einem der vorhergehenden Ansprüche.

6. Verwendung des latent reaktiven Klebefilms auf Polyurethanbasis gemäß Anspruch 5, wobei der Klebefilm auf den Einsatzort bzw. die Fügepartner aufgebracht wird, wo der Klebefilm schließlich mittels einer Aktivierungstemperatur von 70-120°C seine endfeste Verbindung entfaltet.

## Claims

1. A method of manufacturing a latently reactive polyurethane-based adhesive film exhibiting a melting point of 50 ± 10°C, wherein
- up to 98 wt.-% of a crystalline and/or crystalline and amorphous polyurethane dispersion are mixed with 2 to 65 wt.-%, of an electrically conductive filler and a cross-linking agent, wherein the cross-linking agent is an isocyanate-containing component, which is dispersed into the polyurethane dispersion and exhibits an activation temperature of 70-120°C,
- the polyurethan dispersion together with the dispersed electrically conductive adhesive and the cross-linking agent is applied onto a carrier, in particular a conductive carrier or a release liner, creating a laminate,
- drying the laminate.

2. Method according to claim 1, **characterized in that** the cross-linking agent comprises blocked isocyanate groups or isocyanate groups which are deactivated on a surface area of the isocyanate particles.

3. Method according to claim 1 or 2, **characterized in that** the adhesive film comprises
up to 40 wt.-% of a cross-linking agent,
up to 5 wt.-% of a thickening agent, and/or
up to 5 wt.-% of a dispersing additive.

4. Method according to any of the preceding claims, **characterized in that** the electrically conductive filler comprises metals, silver-enhanced metals, metal oxides, carbon-containing materials and/or conductive polymers.

5. Latently reactive polyurethane-based adhesive film manufactured using the method according to any of the preceding claims.

6. Usage of the latently reactive polyurethane-based adhesive film according to claim 5, wherein the adhesive film is applied onto the application area or the parts to be bonded and achieves its final bonding strength after applying an activation temperature of 70-120°C.

## Revendications

1. Un procédé de fabrication d'un film adhésif à base de polyuréthane à réactivité latente présentant un point de fusion de 50 ± 10 °C, **caractérisé en ce que**
- jusqu'à 98 % en poids d'une dispersion de polyuréthane cristalline et/ou cristalline et amorphe sont mélangés à de 2 à 65 % en poids d'une charge conductrice et d'un agent de réticulation. Cet agent de réticulation est un composant contenant un isocyanate, dispersé dans la dispersion de polyuréthane et présentant une température d'activation de 70 à 120 °C,
- la dispersion de polyuréthane, contenant l'adhésif conducteur et l'agent de réticulation, est appliquée sur un support, notamment un support conducteur ou un film protecteur, formant ainsi un stratifié,
- le stratifié est ensuite séché.

2. Un procédé selon la revendication 1, **caractérisé en ce que** l'agent de réticulation comprend des groupes isocyanates bloqués ou désactivés en surface des particules d'isocyanate.

3. Um procédé selon la revendication 1 ou 2, **caractérisé en ce que** le film adhésif comprend
jusqu'à 40 % en poids d'un agent de réticulation,
jusqu'à 5 % en poids d'un agent épaississant et/ou
jusqu'à 5 % en poids d'un additif dispersant.

4. Un procédé selon l'une quelconque des revendications précédentes, **caractérisé en ce que** la charge conductrice comprend des métaux, des métaux renforcés à l'argent, des oxydes métalliques, des matériaux carbonés et/ou des polymères conducteurs.

5. Un film adhésif à base de polyuréthane à réactivité latente, fabriqué selon le procédé décrit dans l'une quelconque des revendications précédentes.

6. L'utilisation du film adhésif à base de polyuréthane à réactivité latente selon la revendication 5, dans lequel le film adhésif est appliqué sur la zone d'application ou les pièces à coller et atteint sa résistance de collage finale après activation à une température de 70 à 120 °C.
